# EUROPÄISCHE PATENTSCHRIFT

(11) **EP 0 916 252 B1**
(45) Veröffentlichungstag und Bekanntmachung des Hinweises auf die Patenterteilung: **19.02.2003**
(21) Anmeldenummer: 98121204.6
(22) Anmeldetag: 06.11.1998
(51) Int. Cl.: A01F 12/40

(54) **Häcksler zum Zerkleinern von Halmgut, vorzugsweise von Stroh**
Crop especially straw chopper
Hacheuse de produits de récolte en particulier de la paille

(30) Priorität: 07.11.1997 DE 19749338
(43) Veröffentlichungstag der Anmeldung: 19.05.1999
(73) Patentinhaber: Schrattenecker, Franz, A-4773 Eggerding (AT)
(72) Erfinder: Schrattenecker, Franz, A-4773 Eggerding (AT)
(74) Vertreter: Gossel, Hans K., Dipl.-Ing.

(56) Entgegenhaltungen:
- EP-A- 0 479 329
- EP-A- 0 748 583
- DE-A- 19 535 175
- DE-C- 862 383
- FR-A- 2 479 648
- US-A- 5 232 405
- US-A- 5 482 508

## Beschreibung

Die Erfindung betrifft einen Häcksler zum Zerkleinern von Halmgut, vorzugsweise von Stroh, nach dem Oberbegriff des Anspruchs 1.

Ein derartiger Häcksler ist aus der EP-A-0 479 329 bekannt.

Aufgabe der Erfindung ist es, einen Häcksler dieser Art zu schaffen, der sich einfach und schnell auf unterschiedliches Halmgut bzw. unterschiedliche Schnittarten einstellen läßt und zu einer verbesserten Zerkleinerung des Halmguts führt.

Erfindungsgemäß wird diese Aufgabe durch die Merkmale des Anspruchs 1 gelöst. Die Schneidwerkzeuge sind plattenförmig ausgebildet und mit Spalten zum Durchtritt der Gegenmesser versehen.

Dadurch, daß die Gegenmesser die Schneidwerkzeuge in ihnen angepaßten Spalten durchsetzen, wird ein guter Schnitt erreicht.

Die Schnittwirkung wird zusätzlich noch dadurch verbessert, daß die Stirnkanten der Schneidwerkzeuge des Rotors mit den Stirnkanten von gehäusefesten Gegenmessern zusammenwirken.

Um eine einfache Befestigung der Schneidwerkzeuge zu erreichen, sind diese zweckmäßigerweise an Halteplatten montiert.

Die Schneidwerzeuge können in parallelen Reihen nebeneinander auf Mantellinien des Rotors oder aber auch versetzt zu einander über den Rotormantel verteilt gelagert sein.

In weiterer Ausgestaltung der Erfindung ist vorgesehen, daß die Schneidwerkzeuge des Rotors in ihrer Schnittstellung durch Scherbolzen gehalten sind. Diese Scherbolzen schützen die Schneidwerkzeuge vor Beschädigungen durch Fremdkörper.

Die Gegenmesser können an dem gehäusefesten Messerbalken zur Einstellung auf Scherenschnitt oder auf ziehenden Schnitt schwenkbar und in ihren eingestellten Schwenkstellungen fixierbar gehalten sein.

Nach einer bevorzugten Ausführungsform ist vorgesehen, daß die Gegenmesser versenkbar und zustellbar im Schneidbalken gehalten sind.

Die zur Rotorachse parallelen Stirnflächen der Rotorschneidmesser können mit den Stirnflächen von an dem gehäusefesten Schneidbalken gehaltenen Gegenmessern zusammenwirken.

Zweckmäßigerweise sind die Stirnflächen der Rotorschneidmesser und der Gegenmesser komplementär ausgebildet.

Die Stirnflächen der Rotorschneidmesser und der Gegenmesser können glatt oder verzahnt ausgebildet sein.

Ausführungsbeispiele der Erfindung werden nachstehend anhand der Zeichnung näher erläutert. In dieser zeigt
- Fig. 1: einen Schnitt durch einen Ausschnitt eines Rotors mit einem Rotorschneidwerkzeug, der mit einem feststehenden Gegenmesser einen Scherenschnitt ausführt,
- Fig. 2: eine der Fig. 1 entsprechende Darstellung, bei der das Gegenmesser auf ziehenden Schnitt eingestellt ist,
- Fig. 3: eine den Fig. 1 und 2 entsprechende Darstellung, in der sich das Gegenmesser in Richtung des Doppelpfeils A zustellen und zurückfahren läßt,
- Fig. 4: eine Draufsicht auf die zusammenwirkenden Rotorschneidwerkzeuge und gehäusefesten Gegenschneiden,
- Fig. 5: eine perspektivische Ansicht des gehäusefesten Messerbalkens mit Gegenmessern und zwei Reihen von Gegenschneiden,
- Fig. 6: eine der Fig. 5 entsprechende Darstellung, in der die Gegenschneiden des Messerbalkens Abstände zueinander aufweisen,
- Fig. 7 - 13a: unterschiedlich ausgebildete Schneidwerkzeuge und mit diesen zusammenwirkende Gegenschneiden.

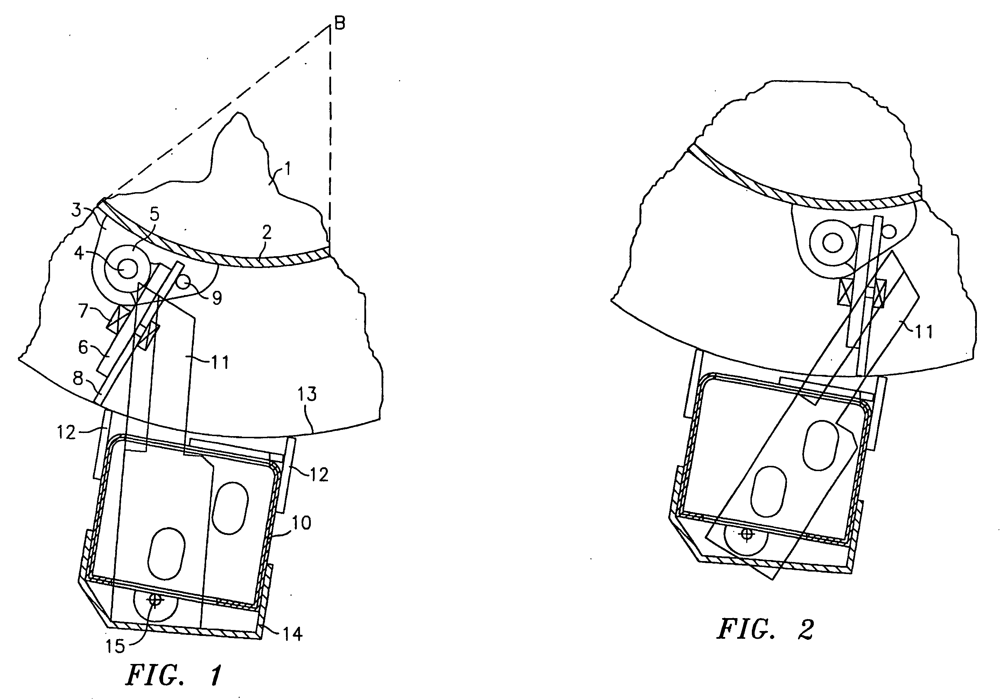

Wie aus den Fig. 1 und 2 ersichtlich ist, sind auf dem Mantel 2 des in dem Häckslergehäuse in üblicher Weise gelagerten Rotors 1 radiale Lagerböcke bildende Bleche 3 aufgeschweißt, zwischen denen auf Wellen oder Achsen 4 Buchsen 5 schwenkbar gelagert sind, mit denen Halteplatten 6 verschweißt sind, auf denen beispielsweise durch Schraubverbindungen 7 die plattenförmigen Rotorschneidwerkzeuge 8 gehalten sind. Zwischen den Lagerböcken 3 ist weiterhin ein Scherbolzen 9 eingesetzt, gegen den sich der einen kürzeren Hebelarm bildende und gegen den Mantel 2 weisende hintere Abschnitt des Rotorschneidwerkzeugs 8 in der dargestellten Schnittstellung abstützt.

Die Rotorschneidwerkzeuge sind mit auf Durchmesserebenen liegenden Schlitzen versehen, durch die die an dem Messerbalken 10 gehaltenen Gegenmesser 11 hindurchtreten.

Mit den vorderen und hinteren Seiten des Messerbalkens 10 sind Gegenschneiden 12 verschraubt, deren Stirnkanten mit den Rotorschneidwerkzeugen zusammenwirken. Die Stirnkanten der Rotorschneidwerkzeuge und der gehäusefesten Gegenschneiden 12 wirken im Bereich des von den Stirnkanten der Rotorschneidwerkzeuge überstrichenen Hüllzylinders 13 zusammen.

In der aus Fig. 1 ersichtlichen Stellung ist das Gegenmesser 11 auf Scherenschnitt eingestellt, während es sich in Fig. 2 in einer Stellung befindet, in der ein ziehender Schnitt ausgeführt wird.

Die Gegenmesser 11 sind in einer mit dem Messerbalken 10 verschraubbaren U-förmigen Kappe 14 um eine zu der Achse des Rotors parallele Achse 15 schwenkbar gelagert, so daß sich die Gegenmesser auf Scherenschnitt und auf ziehenden Schnitt durch entsprechendes Verschwenken und fixieren verstellen lassen.

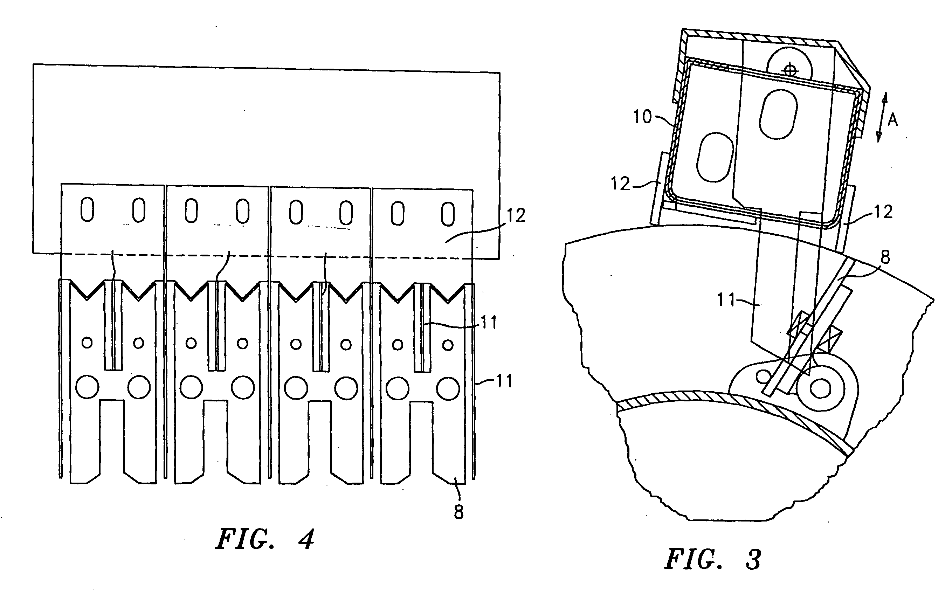

Wie aus Fig. 3 ersichtlich ist, läßt sich das Gegenmesser 11 auch in Richtung des Doppelpfeils A an dem Schneidbalken 10 verstellen, so daß sich das Gegenmesser 11 unterschiedlich weit zu den Rotorschneidwerkzeugen 8 zustellen läßt.

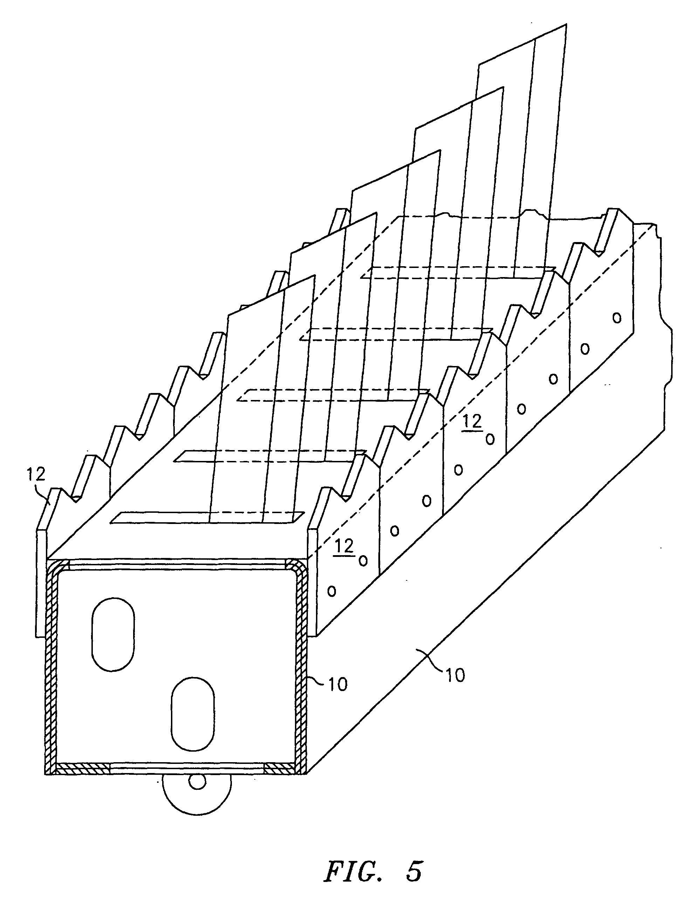

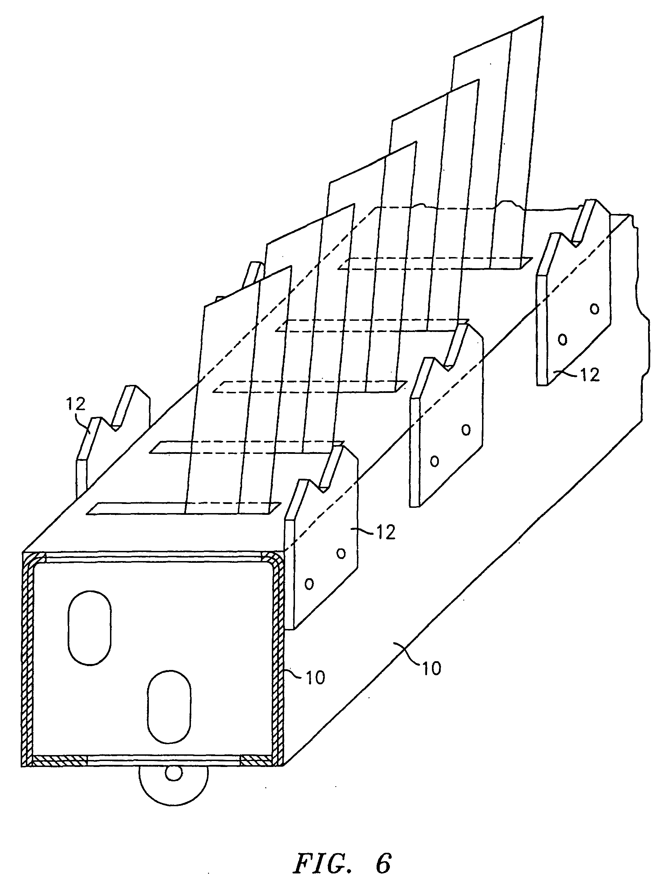

Die Art der Befestigung der Gegenschneiden 12 an dem Messerbalken 10 ist aus den Fig. 5 und 6 ersichtlich.

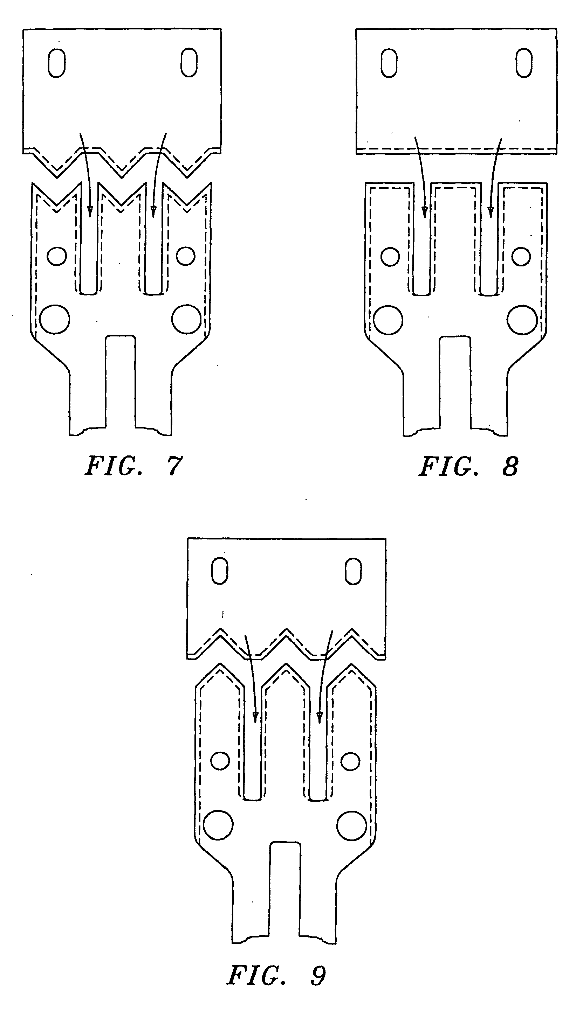

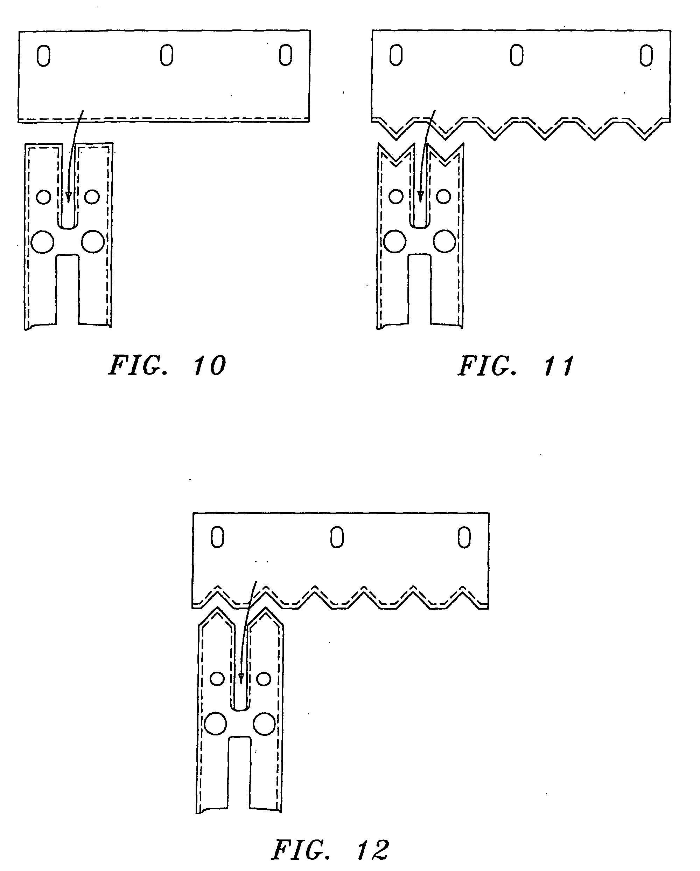

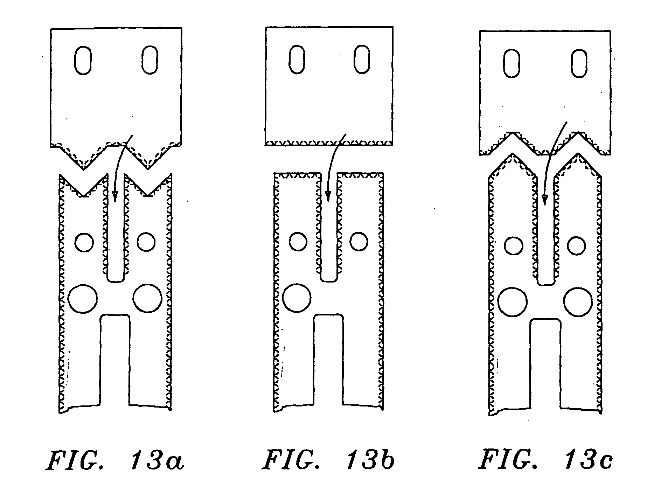

Die unterschiedlichen Formen der Rotorschneidwerkzeuge 8 und der Gegenschneiden 12 sind aus den Fig. 7 bis 13a ersichtlich.

Die Breite der Schneidwerkzeuge ist zweckmäßigerweise größer als 10 mm, um das Stroh leicht zu erfassen und das Häckselgut nach dem Schnittgut beschleunigen zu können.

Ein oder mehrere Schlitze in den Rotorschneidwerkzeugen gewährleisten einen geringen Spalt mit den Gegenmessern, ohne daß auf eine maximale Angriffsfläche der Rotorschneidwerkzeuge verzichtet werden müßte.

Die Gegenmesser und Gegenschneiden können an dem Messerbalken in einer Reihe, in mehreren Reihen oder versetzt montiert werden. Sie können glatt oder gezahnt sein.

Die Gegenschneiden und Gegenmesser lassen sich in Richtung auf die Rotorachse kontinuierlich zustellen oder auch vollständig wegschwenken.

## Patentansprüche

1. Häcksler zum Zerkleinern von Halmgut, vorzugsweise von Stroh, mit einem Häckslergehäuse, in dem ein mit Schneidwerkzeugen (8) und einem Antrieb versehener Rotor (1) gelagert und ein Messerbalken (10) mit Gegenmessern (11) gehaltert ist, wobei die Schneidwerkzeuge (8) an dem Rotor (1) um zur Rotorachse parallele Achsen (4) schwenkbar gelagert sind und wobei Stirnkanten der Schneidwerkzeuge (8) mit Stirnkanten von gehäusefesten Gegenschneiden (12) zusammenwirken,
**dadurch gekennzeichnet,**
**daß** die Schneidwerkzeuge (8) plattenförmig ausgebildet und mit Spalten zum Durchtritt der Gegenmesser (11) versehen sind.

2. Häcksler nach Anspruch 1, **dadurch gekennzeichnet, daß** die Schneidwerkzeuge (8) an Halteplatten (6) montiert sind, die schwenkbar (4) an dem Rotor (1) gelagert sind.

3. Häcksler nach Anspruch 1 oder 2, **dadurch gekennzeichnet, daß** die Schneidwerkzeuge (8) in parallelen Reihen nebeneinander auf Mantellinien des Rotors (1) gelagert sind.

4. Häcksler nach einem der Ansprüche 1 bis 3, **dadurch gekennzeichnet, daß** die Schneidwerkzeuge (8) versetzt zueinander auf dem Rotormantel (2) gelagert sind.

5. Häcksler nach einem der Ansprüche 1 bis 4, **dadurch gekennzeichnet, daß** die Schneidwerkzeuge (8) des Rotors (1) in ihrer Schnittstellung durch Scherbolzen (9) gehalten sind.

6. Häcksler nach einem der Ansprüche 1 bis 5, **dadurch gekennzeichnet, daß** die Gegenmesser (11) an dem Messerbalken (10) zur Einstellung auf Scherenschnitt oder auf ziehenden Schnitt schwenkbar (15) gelagert und in unterschiedlichen Schwenkstellungen fixierbar sind.

7. Häcksler nach einem der Ansprüche 1 bis 6, **dadurch gekennzeichnet, daß** die Gegenmesser (11) versenkbar und zustellbar im Schneidbalken (10) gehalten sind.

8. Häcksler nach einem der Ansprüche 1 bis 7, **dadurch gekennzeichnet, daß** die Rotorschneidwerkzeuge (8) mit mindestens jeweils einer Spalte zum Durchtritt der Gegenmesser (11) versehen sind.

9. Häcksler nach einem der Ansprüche 1 bis 8, **dadurch gekennzeichnet, daß** die zur Rotorachse parallelen Stirnflächen der Rotorschneidmesser (8) mit Stirnflächen von an dem gehäusefesten Schneidbalken (10) gehaltenen Gegenmessern (12) zusammenwirken.

10. Häcksler nach einem der Ansprüche 1 bis 9, **dadurch gekennzeichnet, daß** die Stirnflächen der Rotorschneidmesser (8) und der Gegenmesser (12) komplementär ausgebildet sind.

11. Häcksler nach einem der Ansprüche 6 bis 10, **dadurch gekennzeichnet, daß** die Stirnflächen der Rotorschneidwerkzeuge (8) und der Gegenmesser (12) glatt oder verzahnt ausgebildet sind.

## Claims

1. Cutter for comminuting haulm, preferably straw, having a cutter housing in which a rotor (1) provided with cutting tools (8) and a drive is mounted and a knife bar (10) having opposing knives (11) is held, the cutting tools (8) being mounted on the rotor (1) such that they can pivot about axes (4) parallel to the rotor axis, and front edges of the cutting tools (8) interacting with front edges of opposing cutters (12) fixed to the housing, **characterized in that** the cutting tools (8) are plate-like and are provided with gaps for the opposing knives (11) to pass through.

2. Cutter according to Claim 1, **characterized in that** the cutting tools (8) are mounted on holding plates (6) which are mounted on the rotor (1) such that they can pivot (4).

3. Cutter according to Claim 1 or 2, **characterized in that** the cutting tools (8) are mounted beside one another in parallel rows on generating lines of the rotor (1).

4. Cutter according to one of Claims 1 to 3, **characterized in that** the cutting tools (8) are mounted so as to be offset from one another on the rotor periphery (2).

5. Cutter according to one of Claims 1 to 4, **characterized in that** the cutting tools (8) of the rotor (1) are held in their cutting position by shear pins (9).

6. Cutter according to one of Claims 1 to 5, **characterized in that** the opposing knives (11) are mounted on the knife bar (10) such that they can pivot (15) in order to adjust to a shear cut or to a pulling cut and can be fixed in different pivoting positions.

7. Cutter according to one of Claims 1 to 6, **characterized in that** the opposing knives (11) are held in the cutting bar (10) such that they can be countersunk and advanced.

8. Cutter according to one of Claims 1 to 7, **characterized in that** the rotor cutting tools (8) are provided with at least one gap in each case for the opposing knife (11) to pass through.

9. Cutter according to one of Claims 1 to 8, **characterized in that** the end faces of the rotor cutting knives (8), parallel to the rotor axis, interact with end faces of opposing knives (12) held on the cutting bar (10) fixed to the housing.

10. Cutter according to one of Claims 1 to 9, **characterized in that** the end faces of the rotor cutting knives (8) and of the opposing knives (12) are of complementary design.

11. Cutter according to one of Claims 6 to 10, **characterized in that** the end faces of the rotor cutting tools (8) and of the opposing knives (12) are designed to be smooth or toothed.

## Revendications

1. Hâcheuse pour fragmenter des produits de récolte, de préférence de paille, avec un carter de hâcheuse dans lequel est logé un rotor (1) pourvu d'outils coupants (8) et d'un mécanisme d'entraînement et dans lequel est retenue une barre de coupe (10) avec des contre-couteaux (11), où les outils de coupe (8) sont logés d'une manière pivotante au rotor (1) autour d'axes (4) parallèles à l'axe du rotor, et où des arêtes frontales des outils de coupe (8) coopèrent avec des arêtes frontales de contre-tranchants (12) solidaires du carter, **caractérisée en ce que** les outils de coupe (8) sont réalisés en forme de plaque et présentent des fentes pour le passage des contre-couteaux (11).

2. Hâcheuse selon la revendication 1, **caractérisée en ce que** les outils de coupe (8) sont montés sur des plaques de retenue (6) qui sont logées d'une manière pivotante (4) au rotor (1).

3. Hâcheuse selon la revendication 1 ou 2, **caractérisée en ce que** les outils de coupe (8) sont logés par rangées parallèles les uns à côté des autres sur des lignes d'enveloppe du rotor (1).

4. Hâcheuse selon l'une des revendications 1 à 3, **caractérisée en ce que** les outils de coupe (8) sont logés d'une manière décalée les uns relativement aux autres sur l'enveloppe (2) du rotor.

5. Hâcheuse selon l'une des revendications 1 à 4, **caractérisé en ce que** les outils de coupe (8) du rotor (1) sont retenus dans leur position de coupe par des goujons de cisaillement (9).

6. Hâcheuse selon l'une des revendications 1 à 5, **caractérisée en ce que** les contre-couteaux (11) sont logés d'une manière pivotante (15) à la barre de coupe (10) pour le réglage en vue d'une coupe à ciseaux ou une coupe de traction et peuvent être fixés dans des positions de pivotement différentes.

7. Hâcheuse selon l'une des revendications 1 à 6, **caractérisée en ce que** les contre-couteaux (11) peuvent être noyés et sont retenus de manière rapprochable dans la barre de coupe (10).

8. Hâcheuse selon l'une des revendications 1 à 7, **caractérisée en ce que** les outils de coupe (8) du rotor présentent au moins respectivement une fente pour le passage des contre-couteaux (11).

9. Hâcheuse selon l'une des revendications 1 à 8, **caractérisée en ce que** les faces frontales des couteaux de coupe (8) du rotor, parallèles à l'axe de rotor, coopèrent avec des faces frontales de contre-couteaux (12) retenus à la barre de coupe (10) solidaire du carter.

10. Hâcheuse selon l'une des revendications 1 à 9, **caractérisée en ce que** les faces frontales des couteaux de coupe (8) du rotor et des contre-couteaux (12) sont réalisées d'une manière complémentaire.

11. Hâcheuse selon l'une des revendications 6 à 10, **caractérisée en ce que** les faces frontales des outils de coupe (8) du rotor et des contre-couteaux (12) sont lisses ou dentées.
